# EUROPÄISCHE PATENTSCHRIFT

(11) **EP 2 829 624 B1**
(45) Veröffentlichungstag und Bekanntmachung des Hinweises auf die Patenterteilung: **09.09.2020**
(21) Anmeldenummer: 14002549.5
(22) Anmeldetag: 23.07.2014
(51) Int. Cl.: C22F 1/04, C22C 1/03, C22C 21/00

(54) **Aluminium-Werkstoff mit verbesserter Ausscheidungshärtung**
Aluminium material with improved precipitation hardening
Matière aluminium ayant une trempe par durcissement structural améliorée

(30) Priorität: 24.07.2013 DE 102013012259
(43) Veröffentlichungstag der Anmeldung: 28.01.2015
(73) Patentinhaber: Airbus Defence and Space GmbH, 85521 Ottobrunn (DE)
(72) Erfinder: Palm, Frank, 82008 Unterhaching (DE)
(74) Vertreter: LKGLOBAL Lorenz & Kopf PartG mbB Patentanwälte

(56) Entgegenhaltungen:
- EP-A1- 2 112 243
- US-A1- 2004 055 671
- JOHNSON, NICHOLAS D: "Processing and mechanical properties of cast aluminum containinig scandium, zirconium, and ytterbium", MASTER'S THESIS, MICHIGAN TECHNOLOGICAL UNIVERSITY, 2011, 1. September 2011 (2011-09-01), XP002733008,
- KARNESKY R A ET AL: "Effects of substituting rare-earth elements for scandium in a precipitation-strengthened Al-0.08at. %Sc alloy", SCRIPTA MATERIALIA, ELSEVIER, AMSTERDAM, NL, Bd. 55, Nr. 5, 1. September 2006 (2006-09-01), Seiten 437-440, XP027890380, ISSN: 1359-6462 [gefunden am 2006-09-01]

## Beschreibung

Die vorliegende Erfindung betrifft ein Aluminium-Werkstoff zur Herstellung von Leichtbauteilen, ein Verfahren zur Herstellung eines solchen Aluminium-Werkstoffes sowie die Verwendung eines solchen Aluminium-Werkstoffes als Strukturbauteil oder Innenraumbauteil in einem Passagiertransportfahrzeug.

### Hintergrund der Erfindung

Zur Herstellung von Leichtbauteilen wie Strukturbauteilen oder Innenraumbauteilen in Passagiertransportfahrzeugen wie Luftfahrzeuge, Schienenfahrzeuge oder Wasserfahrzeuge werden häufig Aluminium-Legierungen verwendet. In diesen Anwendungen werden Aluminium-Legierungen üblicherweise geschmolzen und dann durch Nutzung moderner Urformverfahren, wie u.a. Gießverfahren, wie beispielsweise dem Druckguss-, Sandguss-, Kokillengussverfahren oder dem Thixo- oder Rheocasting, aber auch mittels klassischer auf Zerspanung von passenden Halbzeugen basierende Verfahren (subtraktive Verfahren) oder zunehmend durch direkte Produktgenerierungsverfahren (additive Verfahren) in ein Zielbauteil übertragen. Unter einem direkten Produktgenerierungsverfahren werden solche Verfahren verstanden, die "ohne Umwege", d.h. ohne weitere thermo-mechanischen Prozessschritte, direkt und mit der gewünschten Endkontur hergestellt werden und zu Bauteilen führen, die derart belastbar sind, dass sie die mechanischtechnologischen Funktionen "normal ", also standardmäßig, hergestellter Bauteile übernehmen können. Nach der Erstarrung des so direkt generierten Aluminium-Werkstoffes weist das Zielbauteil ein Gussgefüge mit speziellen Festigkeitseigenschaften und Bauteileigenspannungen auf, die insbesondere durch die Legierungschemie und Abkühlungsbedingungen definiert sind. Die Festigkeit und Bauteileigenspannung der erhaltenen Bauteile kann, wenn der Werkstoff schnell genug erstarrt ist, häufig im direkten Anschluss daran noch durch eine Ausscheidungshärtung, die auch als Auslagerung bezeichnet wird, verbessert werden. Eine solche erstrebenswerte, weil Vorteile erzeugende schnelle Abkühlung wird meist jedoch durch wirtschaftlich-getriebene Prozessparameter ver- oder behindert.

Aluminium-Legierungen, insbesondere Aluminium-Legierungen, die Scandium umfassen, sind beispielsweise aus der DE 10 2007 018 123 A1, DE 103 52 932 A1, US 3 619 181 A, EP 0 238 550 A, EP 1 111 078 A2 oder der DE 100 248 594 A1 bekannt. Die gleichzeitige Zulegierung von Scandium (Sc) und Zirkonium (Zr) zu Aluminium-Legierungen gilt zwar grundsätzlich als besonders festigkeitssteigernd, jedoch führt diese Zulegierung in der Regel, aufgrund verzögernder Erstarrungsbedingungen, zur Bildung von, wegen ihrer Größe von > 50 nm, nicht mehr kohärenten intermetallischen Dispersoiden vom Typ Al₃X (metall-physikalisch aufgrund ihrer Stöchometrie auch L1₂, DO₂₂ bzw. DO₂₃ - Phasen genannt). Aufgrund der geringen Raumtemperatur-Löslichkeiten von Sc und Zr im Aluminium-Werkstoff kommt es bei einer zu langsamen Erstarrung dieser AlSc bzw. AlScZr-Legierungen zu der vorzeitigen, oben beschriebenen unerwünschten Phasenbildung und damit zu einer Verschlechterung der erreichbaren Werkstoffeigenschaften, insbesondere einer niedrigeren Festigkeit. Die dadurch festgelegten negativen Grundwerkstoffeigenschaften können bisher durch herkömmliche Wärmenachbehandlungen, wie z.B. Lösungsglühen und Ausscheidungshärtung nicht mehr korrigiert werden.

Es wäre somit wünschenswert einen modifizierten, mit Scandium und Zirconium legierten Aluminium-Werkstoff bereitzustellen, der keine oder eine, im Vergleich zu herkömmlichen Aluminium-Werkstoffen, geringere Menge der oben-genannten auskristallisierenden dispersoiden Phasen aufweist und somit im Umkehrschluss und als Folge dessen die, während der direkten Bauteilgenerierung benötigte "kritische" Abkühlgeschwindigkeit, bei der die unerwünschte vorzeitige Bildung dieser Al₃X-Phasen unterdrückt oder zumindest minimiert wird, ausreichend klein ist.

Aufgabe der vorliegenden Erfindung ist es daher, einen Aluminium-Werkstoff zur Herstellung von Leichtbauteilen zur Verfügung zu stellen, der, im Vergleich zu herkömmlichen Aluminium-Werkstoffen, eine geringe, verbleibende Bauteileigenspannung und hohe Grundwerkstofffestigkeit aufweist. Ferner ist eine Aufgabe der vorliegenden Erfindung, dass der Aluminium-Werkstoff eine hohe Gefügehärte aufweist und, im Vergleich zu herkömmlichen Aluminium-Werkstoffen, bei gleicher Temperatur länger temperiert werden kann, also eine verbesserte, technisch nutzbare Ausscheidungshärtung zeigt. Eine weitere Aufgabe der vorliegenden Erfindung ist es, ein Verfahren zur Herstellung eines solchen Aluminium-Werkstoffes zur Verfügung zu stellen. Insbesondere soll dieses Verfahren einen niedrigen Fertigungsaufwand aufweisen und die Entstehung von Bauteileigenspannungen minimieren bei gleichzeitiger Maximierung der Festigkeit und Ausscheidungshärtung.

Diese Aufgaben werden durch die in den Ansprüchen definierten Gegenstände gelöst. Vorteilhafte Ausführungsformen sind Gegenstand von Unteransprüchen.

### Zusammenfassung der Erfindung

Ein erster Gegenstand der vorliegenden Erfindung ist dementsprechend ein Aluminium-Werkstoff zur Herstellung von Leichtbauteilen, der Aluminium-Werkstoff bestehend aus Aluminium (Al), Scandium (Sc), Zirconium (Zr) und Ytterbium (Yb), und optional mindestens einem weiteren Legierungselement ausgewählt aus der Gruppe umfassend Mg, Zn, Cu, Mn, Si, Li, Ag, Ti, Nb, Ta, Hf, Fe, Ni, Co, Cr, V, Y, La, Eu, Nd, Gd, Tb, Dy, Er, Pr und Ce, wobei das Gewichtsverhältnis von Scandium (Sc) zu Zirconium (Zr) zu Ytterbium (Yb) [Sc/Zr/Yb] in einem Bereich von 10/5/2.5 bis 10/2.5/1.25 liegt, wobei der Werkstoff Scandium (Sc) in einer Menge von 0.3 bis 1.5 Gew.-%, bezogen auf das Gesamtgewicht des Aluminium-Werkstoffs, Zirconium (Zr) in einer Menge von 0.075 bis 0.75 Gew.-%, bezogen auf das Gesamtgewicht des Aluminium-Werkstoffs, Ytterbium (Yb) in einer Menge von 0.0375 bis 0.375 Gew.-%, bezogen auf das Gesamtgewicht des Aluminium-Werkstoffs, und das optional mindestens eine weitere Legierungselement ausgewählt aus der Gruppe umfassend Mg, Zn, Cu, Mn, Si, Li, Ag in einer Menge bis 10.0 Gew.-%, bezogen auf das Gesamtgewicht des Aluminiumwerkstoffs, und/oder das optional mindestens eine weitere Legierungselement ausgewählt aus der Gruppe umfassend Ti, Nb, Ta, Hf, Fe, Ni, Co, Cr, V, Y, La, Eu, Nd, Gd, Tb, Dy, Er, Pr und Ce in einer Menge bis 2.0 Gew.-%, bezogen auf das Gesamtgewicht des Aluminium-Werkstoffs, und als Rest Aluminium und unvermeidbare Verunreinigungen umfasst..

Der erfindungsgemäße Aluminium-Werkstoff ist zur Herstellung von Leichtbauteilen geeignet. Ein weiterer Vorteil ist, dass der Aluminium-Werkstoff eine hohe Gefügehärte sowie eine verbesserte Ausscheidungshärtung aufweist. Ein weiterer Vorteil ist, dass Bauteile, die aus dem Aluminium-Werkstoff hergestellt wurden, nach Durchführung einer definierten Wärmebehandlung eine geringe Bauteileigenspannung und eine hohe Festigkeit aufweisen.

Der Werkstoff umfasst Scandium (Sc) in einer Menge von 0.3 bis 1.5 Gew.-%, bezogen auf das Gesamtgewicht des Aluminium-Werkstoffes.

Der Werkstoff umfasst Zirconium (Zr) in einer Menge von 0.075 bis 0.75 Gew.-%, bezogen auf das Gesamtgewicht des Aluminium-Werkstoffes, und der Werkstoff umfasst Ytterbium (Yb) in einer Menge von 0.0375 bis 0.375 Gew.-%, bezogen auf das Gesamtgewicht des Aluminium-Werkstoffes.

Beispielsweise a) weist der Werkstoff bei Raumtemperatur eine Zugfestigkeit und/oder eine Streckgrenze in einem Bereich von 350 bis 800 MPa auf, und/oder b) liegt die Zugfestigkeit und/oder die Streckgrenze bei Raumtemperatur nach einer weiteren Wärmebehandlung des Werkstoffes in einem Temperaturbereich von 300 bis 400 °C über der Zugfestigkeit und/oder Streckgrenze des gleichen Werkstoffes, der ohne weitere Wärmebehandlung hergestellt wurde.

Die vorliegende Erfindung stellt ferner ein Verfahren zur Herstellung des Aluminium-Werkstoffes zur Verfügung, das Verfahren umfassend
a) Bereitstellen einer Aluminium (Al)-Scandium (Sc)-Zirconium (Zr)-Basislegierung,
b) Zulegieren von Ytterbium (Yb) zu der AlScZr-Basislegierung aus Schritt a) zur Herstellung einer geschmolzenen Aluminium (Al)-Scandium (Sc)-Zirconium (Zr)- Ytterbium (Yb)-Legierung,
c) Abkühlen der in Schritt b) erhaltenen geschmolzenen AlScZrYb-Legierung im Temperaturintervall T_{liquidus} - T_{350°C} mit einer Abkühlrate ≥ 100 K/sec zur Herstellung einer erstarrten AlScZrYb-Legierung, und
d) Wärmebehandeln der erstarrten AlScZrYb-Legierung in einem Temperaturbereich von 250 bis 500 °C.

Beispielsweise wird die AlScZr-Basislegierung durch vorheriges Zulegieren von Zirconium (Zr) zu einer Aluminium (Al)-Scandium (Sc)-Basislegierung erhalten.

Beispielsweise wird eine AlScZr-Basislegierung oder AlSc-Basislegierung verwendet, die mindestens ein weiteres Legierungselement ausgewählt aus der Gruppe umfassend Mg, Zn, Cu, Mn, Si, Li, Ag in einer Menge von 0.5 bis 10.0 Gew.-%, Ti, Nb Ta, Hf, Fe, Ni, Co, Cr, V, und/oder mindestens ein weiteres Legierungselement ausgewählt aus der Gruppe der Lanthanide umfassend Y, La, Eu, Nd, Gd, Tb, Dy, Er, Pr und Ce in einer Menge von 0.05 bis 2.0 Gew.-%, bezogen auf das Gesamtgewicht der AlScZr- oder AlSc-Basislegierung, pro Element umfasst.

Beispielsweise liegt die AlScZr-Basislegierung und/oder AlSc-Basislegierung
a) in Pulver- oder Drahtform, oder
b) als gesintertes, gegossenes, gewalztes oder extrudiertes Formteil vor.

Beispielsweise erfolgt das Schmelzen der AlScZrYb-Legierung in Schritt b)
a) durch einen Laserstahl, einen Elektronenstrahl oder einen Lichtbogen, und/oder
b) durch eine chemische exotherme Reaktion, und/oder
c) kapazitiv, konduktiv oder induktiv.

Beispielsweise erfolgt das Abkühlen der geschmolzenen AlScZrYb-Legierung im Temperaturintervall T_{liquidus} - T_{350°C} mit einer Abkühlrate ≥ 150 K/sec.

Beispielsweise erfolgt das Abkühlen der geschmolzenen AlScZrYb-Legierung auf Raumtemperatur.

Beispielsweise wird die Wärmebehandlung der erstarrten AlScZrYb-Legierung für eine Dauer von 10 min bis 100 h und/oder in mehreren Stufen und/oder Schritten ausgeführt.

Beispielsweise wird die wärmebehandelte AlScZrYb-Legierung einer Abkühlung auf Raumtemperatur unterzogen und die Abkühlgeschwindigkeit ≥ 10 K/sec beträgt.

Beispielsweise wird nach der 1. Wärmebehandlung aus Schritt d) mindestens eine weitere Wärmebehandlung a) unter Luft, Schutzgas oder im Vakuum in einem Temperaturbereich von 300 bis 400 °C für eine Dauer von 10 min bis 100 h und/oder in mehreren Stufen und/oder Schritten, oder b) durch heißisostatisches Pressen in einem Temperaturbereich von 300 bis 400 °C und einem Druckbereich von 100 bis 10000 bar und/oder in mehreren Stufen und/oder Schritten ausgeführt.

Ebenso betrifft die vorliegende Erfindung die Verwendung des Aluminium-Werkstoffes als Strukturbauteil oder Innenraumbauteil in einem Passagiertransportfahrzeug. Beispielsweise in Luftfahrzeugen wie Passagierflugzeugen, in Schienenfahrzeugen wie Züge oder Wasserfahrzeugen wie Passagierschiffe.

### Detaillierte Beschreibung der Erfindung

Die vorliegende Erfindung betrifft einen Aluminium-Werkstoff zur Herstellung von Leichtbauteilen, der Aluminium-Werkstoff bestehend aus Aluminium (Al), Scandium (Sc), Zirconium (Zr) und Ytterbium (Yb), und optional mindestens einem weiteren Legierungselement ausgewählt aus der Gruppe umfassend Mg, Zn, Cu, Mn, Si, Li, Ag, Ti, Nb, Ta, Hf, Fe, Ni, Co, Cr, V, Y, La, Eu, Nd, Gd, Tb, Dy, Er, Pr und Ce, wobei das Gewichtsverhältnis von Scandium (Sc) zu Zirconium (Zr) zu Ytterbium (Yb) [Sc/Zr/Yb] in einem Bereich von 10/5/2.5 bis 10/2.5/1.25 liegt, wobei der Werkstoff Scandium (Sc) in einer Menge von 0.3 bis 1.5 Gew.-%, bezogen auf das Gesamtgewicht des Aluminium-Werkstoffs, Zirconium (Zr) in einer Menge von 0.075 bis 0.75 Gew.-%, bezogen auf das Gesamtgewicht des Aluminium-Werkstoffs, Ytterbium (Yb) in einer Menge von 0.0375 bis 0.375 Gew.-%, bezogen auf das Gesamtgewicht des Aluminium-Werkstoffs, und das optional mindestens eine weitere Legierungselement ausgewählt aus der Gruppe umfassend Mg, Zn, Cu, Mn, Si, Li, Ag in einer Menge bis 10.0 Gew.-%, bezogen auf das Gesamtgewicht des Aluminiumwerkstoffs, und/oder das optional mindestens eine weitere Legierungselement ausgewählt aus der Gruppe umfassend Ti, Nb, Ta, Hf, Fe, Ni, Co, Cr, V, Y, La, Eu, Nd, Gd, Tb, Dy, Er, Pr und Ce in einer Menge bis 2.0 Gew.-%, bezogen auf das Gesamtgewicht des Aluminium-Werkstoffs, und als Rest Aluminium und unvermeidbare Verunreinigungen umfasst.

Ein Erfordernis der vorliegenden Erfindung ist demnach, dass der Aluminium-Werkstoff Aluminium (Al), Scandium (Sc), Zirconium (Zr) und Ytterbium (Yb) umfasst. Beispielsweise besteht der Aluminium-Werkstoff aus Aluminium (Al), Scandium (Sc), Zirconium (Zr) und Ytterbium (Yb).

Der erfindungsgemäße Aluminium-Werkstoff ist daher eine AlScZrYb-Legierung.

In einer Ausführungsform der vorliegenden Erfindung umfasst der Aluminium-Werkstoff mindestens ein weiteres Legierungselement ausgewählt aus der Gruppe umfassend Mg, Zn, Cu, Mn, Si, Li, Ag, Ti, Nb Ta, Hf, Fe, Ni, Co, Cr, V und/oder mindestens ein weiteres Legierungselement ausgewählt aus der Gruppe der Lanthanide umfassend Y, La, Eu, Nd, Gd, Tb, Dy, Er, Pr und Ce. Beispielsweise besteht der Aluminium-Werkstoff aus Aluminium (Al), Scandium (Sc), Zirconium (Zr), Ytterbium (Yb) und mindestens einem weiteren Legierungselement ausgewählt aus der Gruppe umfassend Mg, Zn, Cu, Mn, Si, Li, Ag, Ti, Nb Ta, Hf, Fe, Ni, Co, Cr, V und/oder mindestens einem weiteren Legierungselement ausgewählt aus der Gruppe der Lanthanide umfassend Y, La, Eu, Nd, Gd, Tb, Dy, Er, Pr und Ce.

Der erfindungsgemäße Aluminium-Werkstoff umfasst Aluminium (Al), Scandium (Sc), Zirconium (Zr) und Ytterbium (Yb) in einer Menge von insgesamt mindestens 88.0 Gew.-%, bezogen auf das Gesamtgewicht des Aluminium-Werkstoffes. Beispielsweise umfasst der Aluminium-Werkstoff Aluminium (Al), Scandium (Sc), Zirconium (Zr) und Ytterbium (Yb) vorzugsweise in einer Menge von insgesamt mindestens 89.0 Gew.-%, bevorzugt von insgesamt mindestens 90.0 Gew.-% und am meisten bevorzugt von insgesamt mindestens 91.0 Gew.-% bezogen auf das Gesamtgewicht des Aluminium-Werkstoffes. In einer Ausführungsform der vorliegenden Erfindung umfasst der Aluminium-Werkstoff Aluminium (Al), Scandium (Sc), Zirconium (Zr) und Ytterbium (Yb) vorzugsweise in einer Menge von insgesamt mindestens 92.0 Gew.-%, bevorzugt von insgesamt mindestens 94.0 Gew.-%, weiter bevorzugt von insgesamt mindestens 96.0 Gew.-% und am meisten bevorzugt von insgesamt mindestens 98.0 Gew.-% bezogen auf das Gesamtgewicht des Aluminium-Werkstoffes.

In einer Ausführungsform der vorliegenden Erfindung umfasst der Aluminium-Werkstoff Aluminium (Al), Scandium (Sc), Zirconium (Zr) und Ytterbium (Yb) insgesamt in einer Menge von 88.0 bis 100.0 Gew.-% oder insgesamt in einer Menge von 88.0 bis 99.99 Gew.-%, bezogen auf das Gesamtgewicht des Aluminium-Werkstoffes. Beispielsweise umfasst der Aluminium-Werkstoff Aluminium (Al), Scandium (Sc), Zirconium (Zr) und Ytterbium (Yb) vorzugsweise insgesamt in einer Menge von 88.0 bis 99.95 Gew.-%, bevorzugt von 88.0 bis 99.5 Gew.-% und am meisten bevorzugt von 88.0 bis 99.45 Gew.-% bezogen auf das Gesamtgewicht des Aluminium-Werkstoffes. In einer Ausführungsform der vorliegenden Erfindung umfasst der Aluminium-Werkstoff Aluminium (Al), Scandium (Sc), Zirconium (Zr) und Ytterbium (Yb) vorzugsweise insgesamt in einer Menge von 90.0 bis 99.5 Gew.-%, bezogen auf das Gesamtgewicht des Aluminium-Werkstoffes. Alternativ umfasst der Aluminium-Werkstoff Aluminium (Al), Scandium (Sc), Zirconium (Zr) und Ytterbium (Yb) vorzugsweise insgesamt in einer Menge von 98.0 bis 99.95 Gew.-%, bezogen auf das Gesamtgewicht des Aluminium-Werkstoffes.

In einer Ausführungsform der vorliegenden Erfindung umfasst der Aluminium-Werkstoff das mindestens eine weitere Legierungselement ausgewählt aus der Gruppe umfassend Mg, Zn, Cu, Mn, Si, Li und Ag in einer Menge von 0.5 bis 10.0 Gew.-% pro Element, bezogen auf das Gesamtgewicht des Aluminium-Werkstoffes. Zusätzlich oder alternativ umfasst der Aluminium-Werkstoff das mindestens eine weitere Legierungselement ausgewählt aus der Gruppe umfassend Ti, Nb Ta, Hf, Fe, Ni, Co, Cr und V und/oder ausgewählt aus der Gruppe der Lanthanide umfassend Y, La, Eu, Nd, Gd, Tb, Dy, Er, Pr und Ce in einer Menge von 0.05 bis 2.0 Gew.-% pro Element, bezogen auf das Gesamtgewicht des Aluminium-Werkstoffes.

In einer Ausführungsform der vorliegenden Erfindung umfasst der Aluminium-Werkstoff Aluminium (Al) in einer Menge von 97.375 bis 99.5875 Gew.-%, bezogen auf das Gesamtgewicht des Aluminium-Werkstoffes. Beispielsweise umfasst der Aluminium-Werkstoff Aluminium (Al) in einer Menge von 97.6 bis 99.5 Gew.-% und bevorzugt in einer Menge von 98.0 bis 99.2 Gew.-% und weiter bevorzugt in einer Menge von 98.4 bis 99.0 Gew.-%, bezogen auf das Gesamtgewicht des Aluminium-Werkstoffes.

Um einen Aluminium-Werkstoff mit hoher Gefügehärte sowie einer verbesserten Auscheidungshärtbarkeit zu erhalten, ist es vorteilhaft, dass der Aluminium-Werkstoff Scandium (Sc), Zirconium (Zr) und Ytterbium (Yb) in einer bestimmten Menge umfasst. Beispielsweise umfasst der Aluminium-Werkstoff Scandium (Sc), Zirconium (Zr) und Ytterbium (Yb) in einer Menge von weniger als 2.625 Gew.-%, bezogen auf das Gesamtgewicht des Aluminium-Werkstoffes. In einer Ausführungsform der vorliegenden Erfindung umfasst der Aluminium-Werkstoff Scandium (Sc), Zirconium (Zr) und Ytterbium (Yb) in einer Menge von 0.4125 bis 2.625 Gew.-%, bevorzugt in einer Menge von 0.65 bis 2.1 Gew.-%, weiter bevorzugt in einer Menge von 0.8 bis 1.8 Gew.-% und am meisten bevorzugt in einer Menge von 1.0 bis 1.6 Gew.-% bezogen auf das Gesamtgewicht des Aluminium-Werkstoffes.

Der Aluminium-Werkstoff der vorliegenden Erfindung umfasst Scandium (Sc) in einer Menge von 0.3 bis 1.5 Gew.-%, bezogen auf das Gesamtgewicht des Aluminium-Werkstoffes. Beispielsweise umfasst der Aluminium-Werkstoff Scandium (Sc) in einer Menge von 0.5 bis 1.2 Gew.-% und bevorzugt in einer Menge von 0.5 bis 1.0 Gew.-%, bezogen auf das Gesamtgewicht des Aluminium-Werkstoffes. Die Zulegierung von Scandium (Sc) hat insbesondere den Vorteil, dass es zur Verbesserung der Raumtemperaturfestigkeit beiträgt.

Zusätzlich umfasst der Aluminium-Werkstoff Zirconium (Zr) in einer Menge von 0.075 bis 0.75 Gew.-%, bezogen auf das Gesamtgewicht des Aluminium-Werkstoffes. Beispielsweise umfasst der Aluminium-Werkstoff Zirconium (Zr) in einer Menge von 0.1 bis 0.6 Gew.-% und bevorzugt in einer Menge von 0.2 bis 0.5 Gew.-%, bezogen auf das Gesamtgewicht des Aluminium-Werkstoffes. Die Zulegierung von Zirconium (Zr) hat insbesondere den Vorteil, dass es zur Verbesserung der Raumtemperaturfestigkeit und zur Verbesserung der metallurgischen Warmfestigkeit, also zur Stabilisierung der Gefügemikrostruktur, beiträgt.

Der Aluminium-Werkstoff der vorliegenden Erfindung umfasst Ytterbium (Yb) in einer Menge von 0.0375 bis 0.375 Gew.-%, bezogen auf das Gesamtgewicht des Aluminium-Werkstoffes. Beispielsweise umfasst der Aluminium-Werkstoff Ytterbium (Yb) in einer Menge von 0.05 bis 0.3 Gew.-% und bevorzugt in einer Menge von 0.1 bis 0.3 Gew.-%, bezogen auf das Gesamtgewicht des Aluminium-Werkstoffes. Die Zulegierung von Ytterbium (Yb) hat insbesondere den Vorteil, dass es während der Erstarrung des Werkstoffes dessen Neigung zur Ausscheidung von nicht kohärenten intermetallischen Dispersoiden reduziert und der erhaltene Werkstoff so unkritischer hinsichtlich der Abkühlbedingungen wird.

Ein weiteres Erfordernis der vorliegenden Erfindung ist insbesondere, dass das Gewichtsverhältnis von Scandium (Sc) zu Zirconium (Zr) zu Ytterbium (Yb) [Sc/Zr/Yb] in einem definierten Bereich liegt.

Um einen Aluminium-Werkstoff mit hoher Gefügehärte sowie einer verbesserten Ausscheidungshärtung zu erhalten, ist es erforderlich, dass das Gewichtsverhältnis von Scandium (Sc) zu Zirconium (Zr) zu Ytterbium (Yb) [Sc/Zr/Yb] in dem Aluminium-Werkstoff in einem Bereich von 10/5/2.5 bis 10/2.5/1.25 liegt. Beispielsweise liegt das Gewichtsverhältnis von Scandium (Sc) zu Zirconium (Zr) zu Ytterbium (Yb) [Sc/Zr/Yb] in einem Bereich von 10/5/2.5 bis 10/3/2 und bevorzugt in einem Bereich von 10/5/2.5 bis 10/4/2. In einer Ausführungsform der vorliegenden Erfindung liegt das Gewichtsverhältnis von Scandium (Sc) zu Zirconium (Zr) zu Ytterbium (Yb) [Sc/Zr/Yb] bei etwa 10/5/2.5. Ein weiterer Vorteil dieses Gewichtsverhältnisses von Scandium (Sc) zu Zirconium (Zr) zu Ytterbium (Yb) ist, das Bauteile, die aus dem Aluminium-Werkstoff hergestellt wurden, der durch eine definierte Wärmebehandlung erhalten wird, eine geringe Bauteileigenspannung und hohe Festigkeit aufweisen.

Gemäß einer Ausführungsform der vorliegenden Erfindung weist der Aluminium-Werkstoff durch die definierte Wärmebehandlung bei Raumtemperatur eine Zugfestigkeit in einem Bereich von 350 bis 800 MPa auf. Zusätzlich oder alternativ weist der Aluminium-Werkstoff bei Raumtemperatur eine Streckgrenze in einem Bereich von 350 bis 800 MPa auf.

In einer Ausführungsform der vorliegenden Erfindung weist der Aluminium-Werkstoff bei Raumtemperatur eine Zugfestigkeit oder eine Streckgrenze in einem Bereich von 350 bis 800 MPa auf. In einer weiteren Ausführungsform der vorliegenden Erfindung weist der Aluminium-Werkstoff bei Raumtemperatur eine Zugfestigkeit und eine Streckgrenze in einem Bereich von 350 bis 800 MPa auf.

Zusätzlich oder alternativ liegt die Zugfestigkeit und/oder die Streckgrenze bei Raumtemperatur nach einer weiteren Wärmebehandlung des Werkstoffes in einem Temperaturbereich von 300 bis 400 °C über der Zugfestigkeit und/oder Streckgrenze des gleichen Werkstoffes, der ohne weitere Wärmebehandlung hergestellt wurde. In einer Ausführungsform der vorliegenden Erfindung liegt die Zugfestigkeit oder die Streckgrenze bei Raumtemperatur nach einer weiteren Wärmebehandlung des Werkstoffes in einem Temperaturbereich von 300 bis 400 °C über der Zugfestigkeit oder Streckgrenze des gleichen Werkstoffes, der ohne weitere Wärmebehandlung hergestellt wurde. In einer weiteren Ausführungsform der vorliegenden Erfindung liegt die Zugfestigkeit und die Streckgrenze bei Raumtemperatur nach einer weiteren Wärmebehandlung des Werkstoffes in einem Temperaturbereich von 300 bis 400 °C über der Zugfestigkeit und Streckgrenze des gleichen Werkstoffes, der ohne weitere Wärmebehandlung hergestellt wurde.

Die vorliegende Erfindung betrifft auch ein Verfahren zur Herstellung eines solchen Aluminium-Werkstoffes. Das erfindungsgemäße Verfahren zur Herstellung eines Aluminium-Werkstoffes wie vorstehend beschrieben, umfasst mindestens die Schritte:
a) Bereitstellen einer Aluminium (Al)-Scandium (Sc)-Zirconium (Zr)-Basislegierung,
b) Zulegieren von Ytterbium (Yb) zu der AlScZr-Basislegierung aus Schritt a) zur Herstellung einer geschmolzenen Aluminium (Al)-Scandium (Sc)-Zirconium (Zr)- Ytterbium (Yb)-Legierung,
c) Abkühlen der in Schritt b) erhaltenen geschmolzenen AlScZrYb-Legierung im Temperaturintervall T_{liquidus} - T_{350°C} mit einer Abkühlrate ≥ 100 K/sec zur Herstellung einer erstarrten AlScZrYb-Legierung, und
d) Wärmebehandeln der erstarrten AlScZrYb-Legierung in einem Temperaturbereich von 250 bis 500 °C.

Das erfindungsgemäße Verfahren eignet sich zur Herstellung des oben-genannten Aluminium-Werkstoffes, d.h. einer AlScZrYb-Legierung, und weist einen niedrigen Fertigungsaufwand auf, minimiert die Entstehung von Bauteileigenspannungen bei gleichzeitiger Maximierung der Festigkeit und Ausscheidungshärtung.

Ein Erfordernis des erfindungsgemäßen Verfahrens ist somit, dass eine Aluminium (Al)-Scandium (Sc)-Zirconium (Zr)-Basislegierung bereitgestellt wird. Die AlScZr-Basislegierung wird vorzugsweise dadurch erhalten, dass Zirconium (Zr) zu einer Aluminium (Al)-Scandium (Sc)-Basislegierung zulegiert wird.

Das Zulegieren von Zirconium (Zr) zu der AlSc-Basislegierung erfolgt nach dem im Stand der Technik bekannten Verfahren. Beispielsweise erfolgt das Zulegieren von Zirconium (Zr) zu der AlSc-Basislegierung in der Schmelze. Mit Hilfe dieses Schrittes kann Zirconium (Zr) homogen in der AlSc-Basislegierung verteilt werden.

In einer weiteren Ausführungsform der vorliegenden Erfindung wird die AlSc-Basislegierung vorzugsweise dadurch erhalten, dass Scandium (Sc) zu Aluminium (Al) zulegiert wird. Das Zulegieren von Scandium (Sc) zu Aluminium (Al) erfolgt nach dem im Stand der Technik bekannten Verfahren. Beispielsweise erfolgt das Zulegieren von Scandium (Sc) zu Aluminium (Al) in der Schmelze.

Herstellungsbedingt kann die Aluminium (Al)-Scandium (Sc)-Basislegierung bzw. die Aluminium (Al)-Scandium (Sc)-Zirconium (Zr)-Basislegierung Verunreinigungen anderer Elemente aufweisen.

In einer Ausführungsform der vorliegenden Erfindung umfasst die AISc-Basislegierung bzw. die AlScZr-Basislegierung mindestens ein weiteres Legierungselement ausgewählt aus der Gruppe umfassend Mg, Zn, Cu, Mn, Si, Li, Ag Ti, Nb Ta, Hf, Fe, Ni, Co, Cr, V und/oder mindestens ein weiteres Legierungselement ausgewählt aus der Gruppe der Lanthanide umfassend Y, La, Eu, Nd, Gd, Tb, Dy, Er, Pr und Ce.

Beispielsweise umfasst die AlSc-Basislegierung bzw. die AlScZr-Basislegierung das mindestens eine weitere Legierungselement ausgewählt aus der Gruppe umfassend Mg, Zn, Cu, Mn, Si, Li und Ag in einer Menge von 0.5 bis 10.0 Gew.-% pro Element, bezogen auf das Gesamtgewicht der AlSc-Basislegierung bzw. der AlScZr-Basislegierung. Zusätzlich oder alternativ umfasst die AlSc-Basislegierung bzw. die AlScZr-Basislegierung das mindestens eine weitere Legierungselement ausgewählt aus der Gruppe umfassend Ti, Nb Ta, Hf, Fe, Ni, Co, Cr und V und/oder ausgewählt aus der Gruppe der Lanthanide umfassend Y, La, Eu, Nd, Gd, Tb, Dy, Er, Pr und Ce in einer Menge von 0.05 bis 2.0 Gew.-% pro Element, bezogen auf das Gesamtgewicht der AlSc-Basislegierung bzw. der AlScZr-Basislegierung.

Umfasst die AlSc-Basislegierung bzw. die AlScZr-Basislegierung mindestens ein weiteres Legierungselement, umfasst die AlSc-Basislegierung bzw. die AlScZr-Basislegierung das mindestens eine weitere Legierungselement in Summe maximal in einer Menge von 12.0 Gew.-%, bezogen auf das Gesamtgewicht der AlScZr- bzw. der AlScZr-Basislegierung.

Typischerweise wird die AlScZr-Basislegierung und/oder AlSc-Basislegierung in Pulver- oder Drahtform bereitgestellt. Alternativ, wird die AlScZr-Basislegierung und/oder AlSc-Basislegierung als gesintertes, gegossenes, gewalztes oder extrudiertes Formteil bereitgestellt.

Das Zulegieren von Ytterbium (Yb) zu der AlScZr-Basislegierung in Schritt b) zur Herstellung einer Aluminium (Al)-Scandium (Sc)-Zirconium (Zr)-Ytterbium (Yb)-Legierung erfolgt nach dem im Stand der Technik bekannten Verfahren. Beispielsweise kann das Zulegieren von Ytterbium (Yb) zu der AlScZr-Basislegierung in der Schmelze erfolgen. Mit Hilfe dieses Schrittes kann Ytterbium (Yb) homogen in der AlScZr-Basislegierung verteilt werden.

Die Herstellung der geschmolzenen AlScZrYb-Legierung in Schritt b) kann durch eine Vielzahl unterschiedlicher Wärmequellen erfolgen. Üblicherweise erfolgt die Herstellung der geschmolzenen AlScZrYb-Legierung durch einen Laserstahl, einen Elektronenstrahl oder einen Lichtbogen. Es kann aber auch eine chemische, exotherme Reaktion verwendet werden, oder die Herstellung der geschmolzenen AlScZrYb-Legierung erfolgt kapazitiv, konduktiv oder induktiv. Auch eine beliebige Kombination dieser Wärmequellen ist zur Herstellung der geschmolzenen AlScZrYb-Legierung verwendbar.

Ein Erfordernis des erfindungsgemäßen Verfahrens ist, dass die geschmolzene AlScZrYb-Legierung zur Herstellung einer erstarrten AlScZrYb-Legierung einer definierten schnellen Abkühlung unterzogen wird. Insbesondere ist ein Erfordernis der vorliegenden Erfindung, dass die geschmolzenen AlScZrYb-Legierung im Temperaturintervall T_{liquidus} - T_{350°C} mit einer Abkühlrate ≥ 100 K/sec abgekühlt wird. Beispielsweise erfolgt die Abkühlung der geschmolzenen AlScZrYb-Legierung im Temperaturintervall T_{liquidus} - T_{350°C} mit einer Abkühlrate in einem Bereich von ≥ 150 K/sec.

Verfahren zum schnellen Abkühlen geschmolzener Legierungen sind im Stand der Technik bekannt. Beispielsweise kann das Abkühlen der AlScZrYb-Legierung in einer direkt gekühlten Metall-Kokille erfolgen, einem sogenannten Schmelzspinnverfahren oder einem Pulver-Atomisierungsverfahren wie beispielsweise Verdüsen oder Zerstäuben der Schmelze erfolgen. Mit Hilfe dieses Schrittes kann eine hohe Menge von Scandium (Sc), Zirconium (Zr) und Ytterbium (Yb) im Aluminium (AI) gelöst gehalten werden, ohne dass dabei nicht mehr kohärente intermetallische Dispersoide gebildet werden.

In einer Ausführungsform der vorliegenden Erfindung erfolgt das Abkühlen der geschmolzenen AlScZrYb-Legierung auf Raumtemperatur.

Ein weiteres Erfordernis des erfindungsgemäßen Verfahrens ist, dass die erstarrte AlScZrYb-Legierung in einem Temperaturbereich von 250 bis 500 °C wärmebehandelt wird (Schritt d)). Verfahren zum Wärmebehandeln von Aluminium-Legierungen in einem Temperaturbereich von 250 bis 500 °C sind im Stand der Technik bekannt. Diese Wärmebehandlung verbessert die Materialeigenschaften des Aluminium-Werkstoffes, da Eigenspannungen im Material abgebaut und parallel mittels einer Ausscheidungshärtung die Gefügehärte gesteigert wird.

In einer Ausführungsform der vorliegenden Erfindung erfolgt die Wärmebehandlung gemäß Schritt d) des erfindungsgemäßen Verfahrens direkt im Ansschluss an Schritt c), d.h. die Wärmebehandlung gemäß Schritt d) des erfundungsgemäßen Verfahrens wird direkt mit der in Schritt c) erhaltenen erstarrten AlScZrYb-Legierung durchgeführt. Mit anderen Worten, das erfindungsgemäße Verfahren wird ohne einen oder mehrere weitere Verfahrensschritte zwischen den Verfahrensschritten c) und d) durchgeführt.

Alternativ wird das erfindungsgemäße Verfahren mit einem oder mehreren weiteren Verfahrensschritten zwischen den Verfahrenschritten c) und d) durchgeführt. In einer Ausführungsform der vorliegenden Erfindung erfolgt direkt im Ansschluss an Schritt c) die Herstellung eines thermo-mechanisch prozessierten Formteils, z.B. eines extrudierten Formteils, aus der in Schritt c) erhaltenen erstarrten AlScZrYb-Legierung. D.h. in diesem Fall wird die Wärmebehandlung gemäß Schritt d) des erfindungsgemäßen Verfahrens an einem thermo-mechanisch prozessierten Formteil, z.B. einem extrudierten Formteil, durchgeführt, das aus der in Schritt c) erhaltenen erstarrten AlScZrYb-Legierung hergestellt wurde.

Das thermo-mechanisch prozessierte Formteil wird beispielsweise dadurch erhalten, dass die in Schritt c) erhaltene erstarrte AlScZrYb-Legierung extrudiert wird. Das Extrudieren der in Schritt c) erhaltenen erstarrten AlScZrYb-Legierung erfolgt nach dem im Stand der Technik bekannten Verfahren. Beispielsweise erfolgt das Extrudieren bei Temperaturen zwischen 300 und 400°C oder bei einer Temperatur zwischen 310 und 380°C. Zusätzlich oder alternativ, erfolgt das Extrudieren bei einem Verpress-Verhältnis in einem Bereich von 20:1 bis 50:1, bevorzugt von 20:1 bis 40:1 und weiter bevorzugt von 20:1 bis 30:1. Beispielsweise erfolgt das Extrudieren bei einem Verpress-Verhältnis von 20:1 bis 25:1. In einer Ausführungsform der vorliegenden Erfindung erfolgt das Extrudieren bei Temperaturen zwischen 300 und 400°C und einem Verpress-Verhältnis von 20:1 bis 50:1, beispielsweise erfolgt das Extrudieren bei Temperaturen zwischen 310 und 380°C und einem Verpress-Verhältnis von 20:1 bis 40:1 oder von 20:1 bis 30:1.

In einer weiteren Ausführungsform der vorliegenden Erfindung wird die in Schritt c) erhaltene, erstarrte AlScZrYb-Legierung, bevor sie extrudiert wird, bei einer Temperatur zwischen 250 und 400°C entgast. Beispielsweise wird dafür die in Schritt c) erhaltene erstarrte AlScZrYb-Legierung zunächst mechanisch zu einem Granulat oder Pulver zerkleinert. Das Entgasen erfolgt daher vorzugsweise mit der in Schritt c) erhaltenen erstarrten, in Pulverform vorliegenden AlScZrYb-Legierung. Das mechanische Zerkleinern der in Schritt c) erhaltenen erstarrten AlScZrYb-Legierung erfolgt nach dem im Stand der Technik bekannten Verfahren. Die mechanisch zerkleinerte AlScZrYb-Legierung kann anschließend bei einer Temperatur zwischen 250 und 400°C entgast werden. Beispielsweise erfolgt das Entgasen bei Temperaturen zwischen 250 und 400°C für eine Dauer von 10 min bis 5 h oder bei Temperaturen zwischen 280 und 350°C für eine Dauer von 30 min bis 3 h. Beispielsweise das Entgasen im Vakuum, wie z.B. bei einem Druck von etwa 10⁻³ bar, erfolgen.

In einer Ausführungsform der vorliegenden Erfindung erfolgt die Wärmebehandlung gemäß Schritt d) des erfindungsgemäßen Verfahrens in einem Temperaturbereich von 250 bis 500 °C für eine Dauer von 10 min bis 100 h. Die Wärmebehandlung kann typischerweise bei Temperaturen zwischen 250 und 450°C für eine Dauer von 10 min bis 10 h erfolgen. Beispielsweise erfolgt die Wärmebehandlung bei Temperaturen zwischen 300 und 450°C für eine Dauer von 10 min bis 5 h oder bei Temperaturen zwischen 300 und 400°C für eine Dauer von 30 min bis 3 h. Beispielsweise kann die Wärmebehandlung unter Luft, Schutzgas oder im Vakuum erfolgen, beispielsweise im Vakuum. Die Wärmebehandlung gemäß Schritt d) des erfindungsgemäßen Verfahrens kann auch in mehreren Stufen und/oder Schritten ausgeführt werden. Beispielsweise erfolgt die Wärmebehandlung gemäß Schritt d) des erfindungsgemäßen Verfahrens unter Luft bei Temperaturen zwischen 300 und 400°C für eine Dauer von 30 min bis 3 h.

Zur Verbesserung der Werkstoffeigenschaften kann die AlScZrYb-Legierung einer weiteren definierten Abkühlung nach der Wärmebehandlung gemäß Schritt d) unterzogen werden. Beispielsweise erfolgt die Abkühlung der wärmebehandelten AlScZrYb-Legierung auf Raumtemperatur. In einer Ausführungsform der vorliegenden Erfindung erfolgt die Abkühlung der wärmebehandelten AlScZrYb-Legierung auf Raumtemperatur mit einer Abkühlgeschwindigkeit, die ≥ 10 K/sec, und vorzugsweise ≥ 10 bis 20 K/sec, beträgt. Beispielsweise erfolgt die Abkühlung der wärmebehandelten AlScZrYb-Legierung auf Raumtemperatur mit einer Abkühlgeschwindigkeit in einem Bereich von ≥ 20 K/sec oder in einem Bereich von 20 K/sec bis 10.000 K/sec.

Solche Verfahren zur Abkühlung wärmebehandelter Legierungen sind im Stand der Technik bekannt. Beispielsweise kann eine definierte, beschleunigte Schnellabkühlung der wärmebehandelten AlScZrYb-Legierung auf Raumtemperatur mit Hilfe einer Kühlung an bewegter Luft oder durch Abschrecken in Wasser erfolgen.

Obwohl im Regelfall nicht erforderlich, kann eine der Wärmebehandlung gemäß Schritt d) des erfindungsgemäßen Verfahrens nachgeschaltete weitere Wärmebehandlung, auch als künstliche Alterung bezeichnet, die Materialeigenschaften des hergestellten Aluminium-Werkstoffes noch weiter verbessern und insbesondere deren Festigkeit und Zähigkeit erhöhen. In einer Ausführungsform der vorliegenden Erfindung, wird daher nach der Wärmebehandlung gemäß Schritt d) mindestens eine weitere Wärmebehandlung durchgeführt. Beispielsweise wird nach der Wärmebehandlung gemäß Schritt d) eine weitere Wärmebehandlung durchgeführt.

Diese nachträgliche weitere Wärmebehandlung, oder auch künstliche Alterung, kann typischerweise unter Luft, Schutzgas oder im Vakuum in einem Temperaturbereich von 300 bis 400 °C für eine Dauer von 10 min bis 100 h ausgeführt werden. Besonders bevorzugt erfolgt die nachträgliche weitere Wärmebehandlung unter Luft, Schutzgas oder im Vakuum in einem Temperaturbereich von 320 bis 380 °C für eine Dauer von 10 min bis 10 h, beispielsweise 30 min bis 5 h. Alternativ erfolgt die nachträgliche weitere Wärmebehandlung durch heißisostatisches Pressen in einem Temperaturbereich von 300 bis 400 °C und einem Druckbereich von 100 bis 10000 bar. Die nachträgliche weitere Wärmebehandlung kann in einer oder mehreren Stufen und/oder Schritten ausgeführt werden. In einer Ausführungsform der vorliegenden Erfindung erfolgt die nachträgliche weitere Wärmebehandlung unter Luft in einem Temperaturbereich von 300 bis 400 °C für eine Dauer von 10 min bis 10 h oder unter Luft in einem Temperaturbereich von 320 bis 380 °C für eine Dauer von 30 min bis 5 h.

Des Weiteren kann der hergestellte Aluminium-Werkstoff nach der nachträglichen weiteren Wärmebehandlung, d.h. der künstlichen Alterung, einer weiteren Abkühlung (z. B. durch Abschrecken in Wasser) unterzogen werden. Beispielsweise erfolgt die Abkühlung der nachträglich wärmebehandelten AlScZrYb-Legierung auf Raumtemperatur. In einer Ausführungsform der vorliegenden Erfindung erfolgt die Abkühlung der nachträglich wärmebehandelten AlScZrYb-Legierung auf Raumtemperatur mit einer Abkühlgeschwindigkeit, die ≥ 10 K/sec beträgt. Beispielsweise erfolgt die Abkühlung der nachträglich wärmebehandelten AlScZrYb-Legierung auf Raumtemperatur mit einer Abkühlgeschwindigkeit in einem Bereich von ≥ 20 K/ oder in einem Bereich von 20 K/sec bis 10.000 K/sec.

Aufgrund der Vorteile, die der erfindungsgemäße Aluminium-Werkstoff bietet, betrifft die vorliegende Erfindung auch die Verwendung des Aluminium-Werkstoffes als Strukturbauteil oder Innenraumbauteil in einem Passagiertransportfahrzeug. Beispielsweise wird der Aluminium-Werkstoff als Strukturbauteil oder Innenraumbauteil in Luftfahrzeugen, wie Passagierflugzeugen, in Schienenfahrzeugen wie Züge oder Wasserfahrzeugen, wie Passagierschiffe, verwendet. Wie vorstehend ausgeführt können durch den erfindungsgemäßen Aluminium-Werkstoff Leichtbauteile erhalten werden, die eine geringe Bauteileigenspannung und hohe Festigkeit aufweisen. Inbesondere weist der erfindungsgemäße Aluminium-Werkstoff eine verbesserte Ausscheidungshärtung auf.

### Vergleichsbeispiele

3 Schmelzen mit den nominellen Zusammensetzungen (in Gew.-%) AlSc0,8, AlSc0,8Zr0,4 und AlSc0,8Zr0,4Yb0,2 wurden aus industriellem 99.8 % reinem Al, AlSc2, AlZr5 und AlYb2 Vorlegierungen erschmolzen, bei 850 °C für 60 min gehalten und dann mittels eines Schmelzspinnverfahrens mit einer Abkühlgeschwindigkeit im Temperaturintervall T_{liquidus} - T_{350°C} von < 0.0001 sec auf Raumtemperatur abgekühlt. Das dabei entstandene dünne (< 100 µm), ca. 5 mm breite und endlose Band wurde nachfolgend mechanisch zerkleinert und als Granulat weiter verarbeitet.

Das erhaltene Granulat wurde dann in einem Rezipienten bei ca. 280 - 300 °C für 60 min. entgast (Vakuum-Bedingungen ca. 10⁻³ mbar) und direkt danach aus der Entgasungswärme heraus mechanisch mit Hilfe einer hydraulischen Presse bei dieser Temperatur auf eine Grobdichte von mindestens 95-98 %, bezogen auf die AlScZrYb-Werkstoffdichte, verdichtet. Diese Vor-Bolzen wurden schließlich überdreht, dann in einer Strangpressvorrichtung auf 320 - 325 °C bzw. 360°C erwärmt und schließlich bei einem Verpressverhältnis von 23:1 in Stäbe mit einem Durchmesser von 6 mm extrudiert. Die nicht ganz geraden Stäbe wurden anschließend in einer Zugprüfmaschine kontrolliert gereckt (bleibende (plastische) Verformung ca. 0.3 - 0.5 %, bezogen auf die eingespannte Stablänge).

Aus den Stäben der 3 Versuchslegierungen wurden sogenannte Norm-Rundzugproben (B4 x 20 nach DIN DIN 50125) herausgearbeitet (pro Stab 3 Zugproben) und bei Raumtemperatur gemäß DIN EN ISO 6892-1 die Bruchdehnung, Brucheinschnürung, Zugfestigkeit sowie Streckgrenze bestimmt. Dies erfolgte im wie gepressten Zustand und nach Ausführung einer definierten Wärmebehandlung (Wärmebehandlung gemäß Verfahrensschritt d) des erfindungsgemäßen Verfahrens) von 350°C für 2h mit nachfolgender Abkühlung auf Raumtemperatur an ruhender Luft, um das Auscheidungshärtungsverhalten der 3 Versuchslegierungen zu überprüfen.

Die Überprüfung der Zusammensetzung der 3 Legierungen mittels ICP/OES-Methode gemäß DIN EN ISO 11885:2009-09 ergab, dass die Legierungen die folgenden Sc-, Zr- und Yb-Gehalte aufwiesen:

| **Element/Legierung** | **AlSc [Gew.-%]** | **AlScZr [Gew.-%]** | **AlScZrYb [Gew.-%]** |
|---|---|---|---|
| **Sc** | 0.75 | 0.72 | 0.72 |
| **Zr** | 0.002 | 0.38 | 0.39 |
| **Yb** | < 0.001 | < 0.001 | 0.25 |

Die Gew.-% sind bezogen auf das Gesamtgewicht der Aluminiumlegierung. Alle weiteren Legierungselemente sind pro Element mit ≤ 0.1 Gew.-%, vorzugsweise sogar mit ≤ 0.01 Gew.-%, bezogen auf das Gesamtgeweicht der Aluminiumlegierung, in der Aluminiumlegierung enthalten und sind somit von untergeordneter Bedeutung.

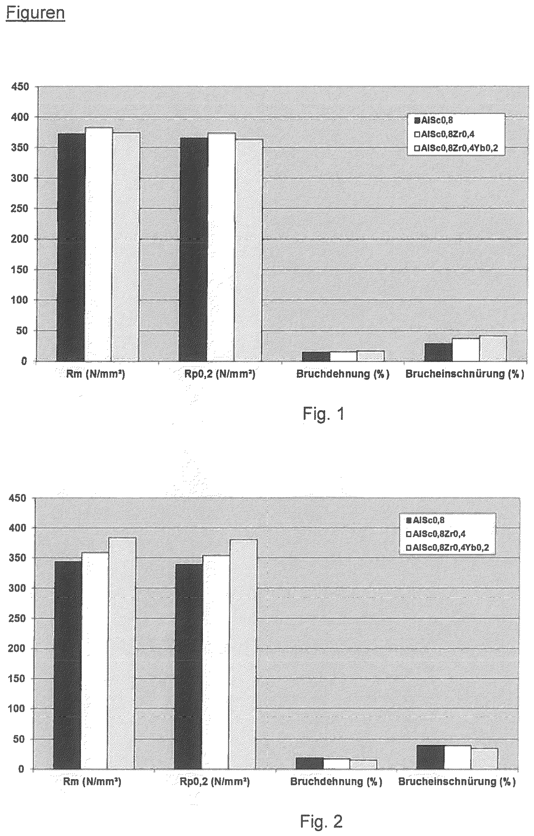

Wie aus Fig. 1 ersichtlich, zeigen die ermittelten Kennwerte (jeweils Mittelwerte aus 3 Zugproben) nach dem Strangpressen, durchgeführt bei 320 - 325 °C ohne Ausführung der zusätzlichen definierten Wärmebehandlung gemäß Schritt d) des erfindungsgemäßen Verfahrens, dass die Festigkeit der mit Zr modifizierten AISc-Legierung am höchsten ist. Hierbei ist festzuhalten, dass nach der thermischen Werkstoffkonditionierung (also das Strangpressen bei 320 - 325 °C), das erzielbare Festigkeitsmaximum für die AlSc-Legierung bereits überschritten ist (die AlSc-Legierung ist bereits leicht "überaltert"), währenddessen für die zusätzlich mit Zr-modifizierte AlSc-Legierung die erzielbare Festigkeit offensichtlich im Maximum liegt, und die Festigkeit für die zusätzlich mit Zr- und Yb-modifizierte AISc-Legierung aber noch etwas geringer ausfällt (die AlScZrYb-Legierung ist noch nicht maximal fest "unteraltert"). Die zusätzlich mit Zr- und Yb-modifizierte AISc-Legierung hat aber das beste Zähigkeitsverhalten (Bruchdehnung & Brucheinschnürung), was gleichbedeutend mit dem besten Kompromiss aus GefügeMikrostruktur und Zugefstigkeit ist.

Wird, wie in Fig. 2 dargestellt, das bei einer Temperatur von 320 - 325 °C extrudierte Material mit einer zusätzlichen Wärmebehandlung beaufschlagt (350°C für 2h; entsprechend der Wärmebehandlung gemäß Schritt d) des erfindungsgemäßen Verfahrens), zeigt sich deutlich, dass die Modifizierung der AlScZr-Legierung mit einem definierten Zusatz von Yb vorteilhaft ist. Nun sind sowohl die AlSc (ohne Wärmebehandlung: Rm = 375 N/mm²; mit Wärmebehandlung: Rm = 345 N/mm²) als auch die AlScZr-Legierung (ohne Wärmebehandlung: Rm = 382 N/mm²; mit Wärmebehandlung: Rm = 360 N/mm²) "überaltert". Nur die AlScZrYb-Legierung zeigt weiterhin eine sehr gute und hohe, sogar leicht verbesserte Raumtemperaturfestigkeit (ohne Wärmebehandlung Rm = 372 N/mm²; mit Wärmebehandlung: Rm = 381 N/mm²). Die Raumtemperaturfestigkeit der AlScZrYb-Legierung ist somit 6% besser als die der AlScZr- und ca. 12 % besser als die der AlSc-Legierung, und dies obwohl die verwendeten Prozesstemperaturen nun ca. 10 - 15 % höher liegen, als die des Stands der Technik.

Metallurgisch erklärt, liegt dies an der verbesserten, weil geringeren Abschreckempfindlichkeit und der verzögerten Ausscheidungskinetik der AlScZrYb-Legierung, wobei der Yb-Zusatz die maximale erzielbare Festigkeit hin zu höheren Prozesstemperaturen verschiebt. Besonders gut erkennbar wird dies, wenn das extrudierte Material, wie im Absatz zuvor beschrieben, mit einer weiteren Wärmebehandlung beaufschlagt wird. Diese Wärmebehandlung gemäß Schritt d) des erfindungsgemäßen Verfahrens wurde einstufig bei einer Temperatur von 350 °C für 2h (die Proben wurden in einen zuvor aufgeheizten Ofen an Luft positioniert) durchgeführt. Nach Abschluß der 2-stündigen Auslagerung bei 350 °C wurden die Proben aus dem Ofen genommen und an ruhender Luft abgekühlt, wobei die Abkühlung nicht explizit kontrolliert wurde, aber die Abkühlungsrate etwa 10 - 20 K/min betrug.

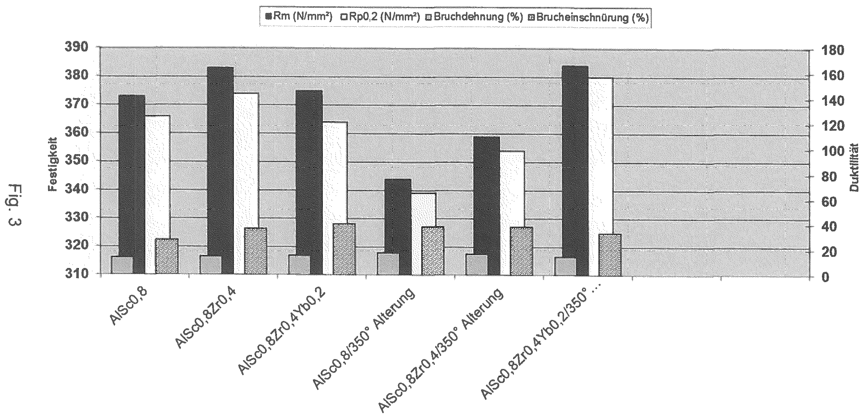

Fig. 3 stellt eine zusammenfassende Darstellung aller ermittelten Kennwerte dar und zeigt eindeutig die Vorteile des Aluminium-Werkstoffes AlSc0,8Zr0,4Yb0,2, wenn dieser im Zuge seiner Verarbeitung, zur Formgebung und Festigkeitseinstellung einer Wärmebehandlung ausgesetzt wurde.

## Patentansprüche

1. Aluminium-Werkstoff zur Herstellung von Leichtbauteilen, der Aluminium-Werkstoff bestehend aus Aluminium (Al), Scandium (Sc), Zirconium (Zr) und Ytterbium (Yb), und optional mindestens einem weiteren Legierungselement ausgewählt aus der Gruppe umfassend Mg, Zn, Cu, Mn, Si, Li, Ag, Ti, Nb, Ta, Hf, Fe, Ni, Co, Cr, V, Y, La, Eu, Nd, Gd, Tb, Dy, Er, Pr und Ce,
wobei das Gewichtsverhältnis von Scandium (Sc) zu Zirconium (Zr) zu Ytterbium (Yb) [Sc/Zr/Yb] in einem Bereich von 10/5/2.5 bis 10/2.5/1.25 liegt,
wobei der Werkstoff Scandium (Sc) in einer Menge von 0.3 bis 1.5 Gew.-%, bezogen auf das Gesamtgewicht des Aluminium-Werkstoffs, Zirconium (Zr) in einer Menge von 0.075 bis 0.75 Gew.-%, bezogen auf das Gesamtgewicht des Aluminium-Werkstoffs, Ytterbium (Yb) in einer Menge von 0.0375 bis 0.375 Gew.-%, bezogen auf das Gesamtgewicht des Aluminium-Werkstoffs, und das optional mindestens eine weitere Legierungselement ausgewählt aus der Gruppe umfassend Mg, Zn, Cu, Mn, Si, Li, Ag in einer Menge bis 10.0 Gew.-%, bezogen auf das Gesamtgewicht des Aluminiumwerkstoffs, und/oder das optional mindestens eine weitere Legierungselement ausgewählt aus der Gruppe umfassend Ti, Nb, Ta, Hf, Fe, Ni, Co, Cr, V, Y, La, Eu, Nd, Gd, Tb, Dy, Er, Pr und Ce in einer Menge bis 2.0 Gew.-%, bezogen auf das Gesamtgewicht des Aluminium-Werkstoffs, und als Rest Aluminium und unvermeidbare Verunreinigungen umfasst.

2. Der Aluminium-Werkstoff gemäß Anspruch 1, wobei
a) der Werkstoff bei Raumtemperatur eine Zugfestigkeit und/oder eine Streckgrenze in einem Bereich von 350 bis 800 MPa aufweist, und/oder
b) die Zugfestigkeit und/oder die Streckgrenze bei Raumtemperatur nach einer weiteren Wärmebehandlung des Werkstoffes in einem Temperaturbereich von 300 bis 400 °C über der Zugfestigkeit und/oder Streckgrenze des gleichen Werkstoffes liegt, der ohne weitere Wärmebehandlung hergestellt wurde.

3. Verfahren zur Herstellung eines Aluminium-Werkstoffes gemäß Anspruch 1 oder 2, das Verfahren umfassend
a) Bereitstellen einer Aluminium (Al)-Scandium (Sc)-Zirconium (Zr)-Basislegierung,
b) Zulegieren von Ytterbium (Yb) zu der AlScZr-Basislegierung aus Schritt a) zur Herstellung einer geschmolzenen Aluminium (Al)-Scandium (Sc)-Zirconium (Zr)-Ytterbium (Yb)-Legierung,
c) Abkühlen der in Schritt b) erhaltenen geschmolzenen AlScZrYb-Legierung im Temperaturintervall T_{liquidus}- T_{350°C} mit einer Abkühlrate ≥ 100 K/sec zur Herstellung einer erstarrten AlScZrYb-Legierung, und
d) Wärmebehandeln der erstarrten AlScZrYb-Legierung in einem Temperaturbereich von 250 bis 500 °C.

4. Verfahren gemäß Anspruch 3, wobei die AlScZr-Basislegierung durch vorheriges Zulegieren von Zirconium (Zr) zu einer Aluminium (Al)-Scandium (Sc)-Basislegierung erhalten wird.

5. Verfahren gemäß Anspruch 3 oder 4, wobei eine AlScZr-Basislegierung oder AlSc-Basislegierung verwendet wird, die mindestens ein weiteres Legierungselement ausgewählt aus der Gruppe umfassend Mg, Zn, Cu, Mn, Si, Li, Ag in einer Menge von 0.5 bis 10.0 Gew.-%, Ti, Nb Ta, Hf, Fe, Ni, Co, Cr, V, und/oder mindestens ein weiteres Legierungselement ausgewählt aus der Gruppe der Lanthanide umfassend Y, La, Eu, Nd, Gd, Tb, Dy, Er, Pr und Ce in einer Menge von 0.05 bis 2.0 Gew.-%, bezogen auf das Gesamtgewicht der AlScZr- oder AlSc-Basislegierung, pro Element umfasst.

6. Verfahren gemäß einem der vorhergehenden Ansprüche 3 bis 5, wobei die AlScZr-Basislegierung und/oder AlSc-Basislegierung
a) in Pulver- oder Drahtform, oder
b) als gesintertes, gegossenes, gewalztes oder extrudiertes Formteil vorliegt.

7. Verfahren gemäß einem der vorhergehenden Ansprüche 3 bis 6, wobei das Schmelzen der AlScZrYb-Legierung in Schritt b) von Anspruch 3
a) durch einen Laserstahl, einen Elektronenstrahl oder einen Lichtbogen, und/oder
b) durch eine chemische exotherme Reaktion, und/oder
c) kapazitiv, konduktiv oder induktiv erfolgt.

8. Verfahren gemäß einem der vorhergehenden Ansprüche 3 bis 7, wobei das Abkühlen der geschmolzenen AlScZrYb-Legierung im Temperaturintervall T_{liquidus}- T_{350°C} mit einer Abkühlrate ≥ 150 K/sec erfolgt.

9. Verfahren gemäß einem der vorhergehenden Ansprüche 3 bis 8, wobei das Abkühlen der geschmolzenen AlScZrYb-Legierung auf Raumtemperatur erfolgt.

10. Verfahren gemäß einem der vorhergehenden Ansprüche 3 bis 9, wobei die Wärmebehandlung der erstarrten AlScZrYb-Legierung für eine Dauer von 10 min bis 100 h erfolgt und/oder in mehreren Stufen und/oder Schritten ausgeführt wird.

11. Verfahren gemäß einem der vorhergehenden Ansprüche 3 bis 10, wobei die wärmebehandelte AlScZrYb-Legierung einer Abkühlung auf Raumtemperatur unterzogen wird und die Abkühlgeschwindigkeit ≥ 10 K/sec beträgt.

12. Verfahren gemäß einem der vorhergehenden Ansprüche 3 bis 11, wobei nach der 1. Wärmebehandlung aus Schritt d) von Anspruch 3 mindestens eine weitere Wärmebehandlung
a) unter Luft, Schutzgas oder im Vakuum in einem Temperaturbereich von 300 bis 400 °C für eine Dauer von 10 min bis 100 h und/oder in mehreren Stufen und/oder Schritten, oder
b) durch heißisostatisches Pressen in einem Temperaturbereich von 300 bis 400 °C und einem Druckbereich von 100 bis 10000 bar und/oder in mehreren Stufen und/oder Schritten ausgeführt wird.

13. Verwendung eines Aluminium-Werkstoffes gemäß einem der Ansprüche 1 oder 2 als Strukturbauteil oder Innenraumbauteil in einem Passagiertransportfahrzeug.

## Claims

1. Aluminium material for the production of lightweight components, the aluminium material consisting of aluminium (Al), scandium (Sc), zirconium (Zr) and ytterbium (Yb), and optionally at least one further alloying element selected from the group comprising Mg, Zn, Cu, Mn, Si, Li, Ag, Ti, Nb, Ta, Hf, Fe, Ni, Co, Cr, V, Y, La, Eu, Nd, Gd, Tb, Dy, Er, Pr and Ce,
wherein the weight ratio of scandium (Sc) to zirconium (Zr) to ytterbium (Yb) [Sc/Zr/Yb] is in a range of 10/5/2.5 to 10/2.5/1.25,
wherein the material scandium (Sc) in an amount of 0.3 to 1.5 wt.%, based on the total weight of the aluminum material, zirconium (Zr) in an amount of 0.075 to 0.75 wt.%, based on the total weight of the aluminum material, ytterbium (Yb) in an amount of 0.0375 to 0.375 wt.%, based on the total weight of the aluminum material, and optionally at least one further alloying element selected from the group comprising Mg, Zn, Cu, Mn, Si, Li, Ag in an amount of up to 10.0 wt.%. based on the total weight of the aluminum material, and/or optionally comprising at least one further alloying element selected from the group comprising Ti, Nb, Ta, Hf, Fe, Ni, Co, Cr, V, Y, La, Eu, Nd, Gd, Tb, Dy, Er, Pr and Ce in an amount of up to 2.0 wt.% based on the total weight of the aluminum material, and the balance aluminum and unavoidable impurities.

2. The aluminium material of claim 1, wherein
(a) the material has a tensile strength and/or a yield strength in the range 350 to 800 MPa at room temperature; and/or
(b) the tensile strength and/or the yield strength at room temperature after further heat treatment of the material in a temperature range of 300 to 400 °C is higher than the tensile strength and/or yield strength of the same material produced without further heat treatment.

3. Process for the production of an aluminium material according to claim 1 or 2, which method comprising
a) providing an aluminium (Al) scandium (Sc) zirconium (Zr) base alloy
b) adding ytterbium (Yb) to the AlScZr base alloy from step a) to produce a molten aluminium (Al) scandium (Sc) zirconium (Zr) ytterbium (Yb) alloy,
c) cooling the molten AlScZrYb alloy obtained in step b) in the temperature interval T(liquidus)-T(350°C) at a cooling rate ≥100 K/sec to produce a solidified AlScZrYb alloy, and
d) heat treating the solidified AlScZrYb alloy in a temperature range of 250 to 500 °C

4. Process according to claim 3, wherein the AlScZr base alloy is alloyed by prior addition of of zirconium (Zr) to an aluminium (Al) scandium (Sc) base alloy is obtained.

5. Process according to claim 3 or 4, wherein an AlScZr base alloy or AlSc-base alloy which contains at least one further alloying element selected from the group comprising Mg, Zn, Cu, Mn, Si, Li, Ag in an amount of 0.5 to 10.0 wt.%, Ti, Nb Ta, Hf, Fe, Ni, Co, Cr, V, and/or at least one further alloying element selected from the group of lanthanides comprising Y, La, Eu, Nd, Gd, Tb, Dy, Er, Pr and Ce in an amount of 0.05 to 2.0 wt.%, based on the total weight of the AlScZr or AlSc base alloy, per element.

6. Process according to any one of the foregoing claims 3 to 5, wherein the AlScZr-base alloy and/or AlSc base alloy
(a) is in powder or wire form; or
(b) is in the form of a sintered, cast, rolled or extruded shape.

7. Process according to any of the foregoing claims 3 to 6, wherein the melting of the AlScZrYb alloy in step b) of claim 3 is performed
(a) by a laser beam, electron beam or electric arc; and/or
(b) by an exothermic chemical reaction; and/or
(c) capacitive, conductive or inductive.

8. Process according to any one of the preceding claims 3 to 7, wherein the cooling of molten AlScZrYb alloy in the temperature interval T(liquidus)-T(350°C) of a cooling rate ≥150 K/sec takes place.

9. Process according to any one of the foregoing claims 3 to 8, wherein cooling of the molten AlScZrYb alloy to room temperature is performed.

10. Process according to any one of the preceding claims 3 to 9, wherein the heat treatment of the solidified AlScZrYb alloy is carried out for a duration of 10 min to 100 h and/or is carried out in several steps and/or stages.

11. Process according to any one of the preceding claims 3 to 10, wherein the heat-treated AlScZrYb alloy is subjected to cooling to room temperature and the cooling rate is ≥10 K/sec.

12. Process according to any one of the preceding claims 3 to 11, wherein after the 1st heat treatment of step d) of claim 3 at least one further heat treatment is carried out
a) under air, inert gas or vacuum in a temperature range of 300 to 400 °C for a period of 10 minutes to 100 hours and/or in several stages and/or steps; or
b) by hot isostatic pressing in a temperature range of 300 to 400 °C and a pressure range of 100 to 10 000 bar and/or in several stages and/or steps.

13. Use of an aluminium material according to one of claims 1 or 2 as a structural component or interior component in a passenger transport vehicle.

## Revendications

1. Le matériau en aluminium pour la production de composants légers, le matériau en aluminium
consistant en aluminium (Al), scandium (Sc), zirconium (Zr) et ytterbium (Yb), et éventuellement au moins un autre élément d'alliage choisi dans le groupe comprenant Mg, Zn, Cu, Mn, Si, Li, Ag, Ti, Nb, Ta, Hf, Fe, Ni, Co, Cr, V, Y, La, Eu, Nd, Gd, Tb, Dy, Er, Pr et Ce,
dans lequel le rapport pondéral du scandium (Sc) au zirconium (Zr) à l'ytterbium (Yb) [Sc/Zr/Yb] est compris entre 10/5/2,5 et 10/2,5/1,25,
dans lequel le matériau scandium (Sc) en une quantité de 0,3 à 1,5 % en poids, par rapport au poids total du matériau aluminium, zirconium (Zr) en une quantité de 0,075 à 0,75 % en poids, par rapport au poids total du matériau aluminium, ytterbium (Yb) en une quantité de 0,0375 à 0,375 % en poids, par rapport au poids total du matériau en aluminium, et éventuellement au moins un autre élément d'alliage choisi dans le groupe comprenant Mg, Zn, Cu, Mn, Si, Li, Ag en une quantité allant jusqu'à 10,0 % en poids. sur la base du poids total du matériau en aluminium, et/ou comprenant éventuellement au moins un autre élément d'alliage choisi dans le groupe comprenant Ti, Nb, Ta, Hf, Fe, Ni, Co, Cr, V, Y, La, Eu, Nd, Gd, Tb, Dy, Er, Pr et Ce en une quantité allant jusqu'à 2,0 % en poids sur la base du poids total du matériau en aluminium, et le reste étant de l'aluminium et des impuretés inévitables.

2. Le matériau en aluminium selon la revendication 1, dans lequel
a) le matériau a une résistance à la traction et/ou une limite d'élasticité comprise entre 350 et 800 MPa à température ambiante ; et/ou
b) la résistance à la traction et/ou la limite d'élasticité à température ambiante, après un traitement thermique supplémentaire du matériau dans une plage de température de 300 à 400 °C, est supérieure à la résistance à la traction et/ou à la limite d'élasticité du même matériau produit sans traitement thermique supplémentaire.

3. Procédé pour la production d'un matériau en aluminium selon la revendication 1 ou 2, qui méthode comprenant
a) fournir un alliage à base d'aluminium (Al) scandium (Sc) zirconium (Zr)
b) ajouter de l'ytterbium (Yb) à l'alliage de base AlScZr de l'étape a) pour produire un alliage d'aluminium (Al) scandium (Sc) zirconium (Zr) ytterbium (Yb) en fusion,
c) refroidissement de l'alliage AlScZrYb fondu obtenu à l'étape b) dans l'intervalle de température T(liquidus)-T(350°C) à une vitesse de refroidissement ≥100 K/sec pour produire un alliage AlScZrYb solidifié, et
d) traitement thermique de l'alliage AlScZrYb solidifié dans une plage de température de 250 à 500 °C

4. Procédé selon la revendication 3, dans lequel l'alliage de base AlScZr est obtenu en alliant préalablement
de zirconium (Zr) à un alliage à base d'aluminium (Al) scandium (Sc) est obtenu.

5. Procédé selon la revendication 3 ou 4, dans lequel un alliage de base AlScZr ou AlSc-alliage de base qui contient au moins un autre élément d'alliage choisi dans le groupe comprenant Mg, Zn, Cu, Mn, Si, Li, Ag en une quantité de 0,5 à 10,0 % en poids, Ti, Nb Ta, Hf, Fe, Ni, Co, Cr, V, et/ou au moins un autre élément d'alliage choisi dans le groupe des lanthanides comprenant Y, La, Eu, Nd, Gd, Tb, Dy, Er, Pr et Ce en une quantité de 0,05 à 2,0 % en poids, sur la base du poids total de l'AlScZr ou de l'alliage de base AlSc, par élément.

6. Procédé selon l'une des revendications 3 à 5 ci-dessus, dans laquelle l'AlScZr-Alliage de base et/ou alliage de base AlSc
a) en poudre ou sous forme de fil ; ou
b) se présente sous la forme d'une pièce frittée, coulée, laminée ou extrudée.

7. Procédé selon l'une des revendications 3 à 6 ci-dessus, dans lequel la fusion de la Alliage AlScZrYb à l'étape b) de la revendication 3
a) par un faisceau laser, un faisceau d'électrons ou un arc électrique ; et/ou
b) par une réaction chimique exothermique ; et/ou
c) capacitif, conducteur ou inductif.

8. Procédé selon l'une des revendications 3 à 7 précédentes, dans lequel le refroidissement alliage AlScZrYb fondu dans l'intervalle de température T(liquidus)-T(350°C) d'une vitesse de refroidissement
≥150 K/sec a lieu.

9. Procédé selon l'une quelconque des revendications 3 à 8 ci-dessus, dans lequel le refroidissement de l'alliage AlScZrYb fondu à la température ambiante est effectué.

10. Procédé selon l'une des revendications 3 à 9 précédentes, dans lequel le traitement thermique de l'alliage AlScZrYb solidifié est effectué pendant une durée de 10 min à 100 h et/ou est réalisé en plusieurs étapes et/ou stades.

11. Procédé selon l'une des revendications 3 à 10 précédentes, dans lequel l'alliage AlScZrYb traité thermiquement est soumis à un refroidissement à température ambiante et la vitesse de refroidissement est de ≥10 K/sec.

12. Procédé selon l'une quelconque des revendications 3 à 11 précédentes, dans lequel, après le premier traitement thermique de l'étape d) de la revendication 3, au moins un autre traitement thermique est effectué
a) à l'air, sous gaz inerte ou sous vide dans une plage de température de 300 à 400 °C pendant une période de 10 minutes à 100 heures et/ou en plusieurs étapes et/ou stades ; ou
b) par pressage isostatique à chaud dans une plage de température de 300 à 400 °C et une plage de pression de 100 à 10 000 bars et/ou en plusieurs étapes et/ou stades.

13. utilisation d'un matériau en aluminium selon l'une des revendications 1 ou 2 en tant qu'élément structurel ou composant intérieur dans un véhicule de transport de passagers.
